# FASCICULE DE BREVET EUROPEEN

(11) **EP 3 990 673 B1**
(45) Date de publication et mention de la délivrance du brevet: **08.05.2024**
(21) Numéro de dépôt: 20785779.8
(22) Date de dépôt: 18.06.2020
(51) Int. Cl.: C22C 19/05, B22F 1/00

(54) **POUDRE DE SUPERALLIAGE, PIECE ET PROCEDE DE FABRICATION DE LA PIECE A PARTIR DE LA POUDRE**
SUPERLEGIERUNGSPULVER, GEGENSTAND UND PRODUKTIONSPROZESS EINES GEGENSTANDES AUS PULVER
SUPERALLOY POWDER, ITEM AND FABRICATION PROCESS OF THE ITEM BASED ON POWDER

(30) Priorité: 28.06.2019 FR 1907198
(43) Date de publication de la demande: 04.05.2022
(73) Titulaire: Safran, 75015 Paris (FR)
(72) Inventeur: RICHARD, Sébastien, Jean, 77550 MOISSY-CRAMAYEL (FR); RAME, Jérémy, 77550 MOISSY-CRAMAYEL (FR)
(74) Mandataire: Cabinet Beau de Loménie
(86) Numéro de dépôt international: PCT/FR2020/051062
(87) Numéro de publication internationale: WO 2020/260806

(56) Documents cités:
- EP-A1- 0 421 229
- EP-A1- 1 195 446
- EP-A1- 3 336 210
- EP-A2- 1 878 533
- FR-A1- 2 944 720

## Description

### Domaine technique

Le présent exposé concerne une poudre de superalliage, une pièce réalisée à partir de la poudre et un procédé de fabrication de la pièce à partir de la poudre.

### Technique antérieure

Le procédé de fabrication d'une pièce métallique par injection de poudre, appelé MIM conformément au sigle anglais pour « Metal Injection Molding », comprend une étape de mélange de la poudre métallique avec des liants plastiques permettant l'injection du mélange dans un moule. La pièce crue obtenue dans le moule d'injection est ensuite déliantée et frittée pour obtenir une pièce dense. Lorsque l'alliage est un superalliage à base de nickel, la pièce dense est ensuite traitée thermiquement afin d'obtenir les propriétés souhaitées.

Toutefois, dans un procédé de fabrication MIM d'un alliage René 77, il est difficile d'obtenir une pièce présentant un bon comportement au fluage, en particulier à des températures supérieures à 800°C (degré Celcius).

Ce comportement au fluage à température élevée peut avoir un impact négatif sur les pièces en René 77 produites par MIM. Ce comportement au fluage peut limiter le domaine d'application des pièces en René 77 réalisées par le procédé MIM.

### Exposé de l'invention

Le présent exposé vise à remédier au moins en partie à ces inconvénients.

A cet effet, le présent exposé concerne une poudre de superalliage à base de nickel comprenant, en pourcentages massiques, 14,00 à 15,25 % de chrome, 14,25 à 15,75 % de cobalt, 3,9 à 4,5 % de molybdène, 4,0 à 4,6 % d'aluminium, 3,0 à 3,7 % de titane, 0 à 0,10 de cuivre, 0 à 0,50 de fer, 0 à 200 ppm de carbone, le complément étant constitué par du nickel et des impuretés inévitables.

Cette poudre est destinée à la fabrication de composants en superalliage à base de nickel, tels que des aubes fixes ou mobiles, par exemples des aubes de turbine à gaz.

Les éléments d'addition majeurs sont le cobalt (Co), le chrome (Cr), le molybdène (Mo), l'aluminium (Al) et le titane (Ti).

Les éléments d'addition mineurs sont le cuivre (Cu) et le fer (Fe), pour lesquels le pourcentage massique maximal est inférieur à 1 %.

On définit comme impuretés inévitables les éléments qui ne sont pas ajoutés de manière intentionnelle dans la composition et qui sont apportés avec d'autres éléments. Parmi les impuretés inévitables, on peut citer, par exemple, le silicium (Si), le manganèse (Mn), l'oxygène (O), le soufre (S), le bore (B) et l'yttrium (Y).

On notera que bien que la teneur en carbone d'un superalliage à base de nickel puisse être donnée par une limite supérieure, les superalliages à base de nickel présentent généralement une teneur en carbone proche de cette limite supérieure. On comprend donc qu'un superalliage comprenant moins de 500 ppm de carbone comporte généralement une teneur proche de 500 ppm en carbone et la teneur en carbone est généralement supérieure à 300 ppm.

Grâce à la teneur en carbone de la poudre qui est inférieur ou égal à 200 ppm (partie par million en masse), il est possible de limiter la teneur en carbone de la pièce crue et de la pièce déliantée. La teneur en carbone de la pièce déliantée étant réduite, lors de l'étape de frittage, il est possible de réduire fortement la précipitation de carbures aux joints de grain, en comparaison à une poudre traditionnelle ayant une composition similaire et dans laquelle la teneur en carbone est généralement supérieure à 500 ppm, voire à 700 ppm.

En effet, les inventeurs ont identifié qu'une des sources qui limite les propriétés au fluage de la pièce est la présence de carbures aux joints de grain qui ralentit, voire empêche, la croissance des grains de la pièce frittée.

Ainsi, lors de l'étape de traitement thermique permettant la croissance des grains dans la pièce frittée, il est possible d'obtenir des grains présentant une taille supérieure à la taille pouvant être obtenue avec une poudre traditionnelle dans laquelle la teneur en carbone est généralement supérieure à 500 ppm, voire à 700 ppm.

La taille des grains étant supérieure à la taille pouvant être obtenue avec une poudre traditionnelle dans laquelle la teneur en carbone est généralement supérieure à 500 ppm, voire à 700 ppm, le comportement au fluage de la pièce est amélioré.

Dans certains modes de réalisation, la poudre de superalliage comprend 5 à 200 ppm de carbone.

Dans certains modes de réalisation, la poudre de superalliage présente une granulométrie D90 inférieure ou égale à 75 µm, de préférence inférieure ou égale à 50 µm, mesurée par diffraction laser selon la norme ISO 13320.

Au plus la granulométrie de la poudre sera inférieure, au plus le frittage pourra être réalisé à température plus basse et au plus la densité obtenue de la pièce frittée sera élevée.

Dans certains modes de réalisation, la poudre de superalliage présente une morphologie sphérique.

La morphologie sphérique est avantageuse pour le procédé MIM et pour le frittage.

Le présent exposé concerne également une pièce réalisée à partir de la poudre de superalliage à base de nickel telle que définie précédemment, la pièce comprenant moins de 700 ppm de carbone, de préférence moins de 600 ppm de carbone

Dans certains modes de réalisation, la pièce est obtenue par un procédé de moulage par injection de poudre.

Dans certains modes de réalisation, la taille moyenne des grains est supérieure ou égale à ASTM6, de préférence supérieure ou égale à ASTM5, encore plus de préférence supérieure ou égale à ASTM 4, mesurée selon la norme ASTM E112-13.

Le présent exposé concerne également un procédé de fabrication d'une pièce à partir d'une poudre de superalliage à base de nickel telle que définie précédemment, comprenant les étapes suivantes :
- mélange de la poudre de superalliage à base de nickel avec au moins deux liants pour obtenir un mélange ;
- moulage par injection du mélange dans un moule pour obtenir une pièce crue ;
- déliantage de la pièce crue pour obtenir une pièce déliantée ;
- frittage de la pièce déliantée pour obtenir une pièce frittée ; et
- traitement thermique de la pièce frittée comprenant une étape de croissance des grains de sorte que la taille moyenne des grains est supérieure ou égale à ASTM6, de préférence supérieure ou égale à ASTM5, encore plus de préférence supérieure ou égale à ASTM4, mesurée selon la norme ASTM E112-13 et une étape de précipitation d'une phase γ'.

Dans certains modes de réalisation, l'étape de frittage est réalisée avec un palier en température compris entre 1 h et 6 h.

Dans certains modes de réalisation, l'étape de croissance des grains est réalisée avec un palier en température supérieur ou égal à 1 h et inférieur ou égal à 20 h, de préférence inférieur ou égal à 15 h, encore plus de préférence inférieur ou égal à 10 h.

Dans certains modes de réalisation, l'étape de précipitation d'une phase γ' réalisée avec un palier en température supérieur ou égal à 1 h et inférieur ou égal à 20 h, de préférence inférieur ou égal à 15 h, encore plus de préférence inférieur ou égal à 10 h.

Dans certains modes de réalisation, le taux de charge du mélange est supérieur ou égal à 55%, de préférence supérieur ou égal à 60% et inférieur ou égal à 75%, de préférence inférieur ou égal à 70%.

Le taux de charge du mélange est défini comme le rapport du volume de poudre sur le volume total (poudre + additifs). Les additifs comprennent les liants et peuvent comprendre d'autres additifs.

Dans certains modes de réalisation, l'étape de déliantage est réalisée en deux sous-étapes, une première sous-étape de déliantage du liant primaire et une deuxième sous-étape de déliantage du liant secondaire.

La deuxième sous-étape de déliantage est une étape thermique, c'est-à-dire une étape au cours de laquelle on chauffe la pièce pour brûler le liant secondaire et obtenir la pièce déliantée.

### Brève description des dessins

D'autres caractéristiques et avantages de l'objet du présent exposé ressortiront de la description suivante de modes de réalisation, donnés à titre d'exemples non limitatifs, en référence aux figures annexées.
[Fig. 1] La figure 1 est un ordinogramme représentant les étapes d'un procédé de fabrication d'une pièce à partir d'une poudre de superalliage à base de nickel du présent exposé.
[Fig. 2A] La figure 2A est une micrographie d'une pièce obtenue par le procédé de la figure 1 à partir d'une poudre de superalliage comprenant plus de 200 ppm de carbone, après l'étape de frittage.
[Fig. 2B] La figure 2B est une micrographie de la pièce de la figure 2A après une étape de croissance des grains.
[Fig. 3A] La figure 3A est une micrographie d'une pièce obtenue par le procédé de la figure 1 à partir d'une poudre de superalliage comprenant moins de 200 ppm de carbone.
[Fig. 3B] La figure 3B est une micrographie de la pièce de la figure 3A après une étape de croissance des grains.

### Description détaillée

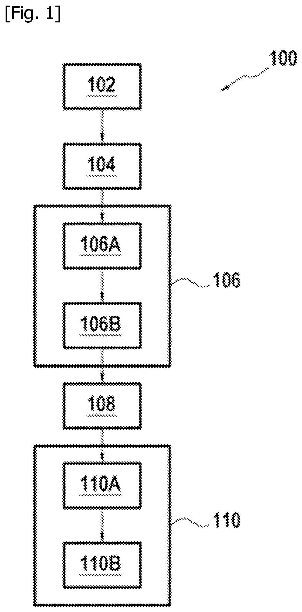

La figure 1 représente de manière schématique un procédé de fabrication 100 d'une pièce à partir d'une poudre de superalliage à base de nickel comprenant entre 0 et 200 ppm de carbone, de préférence entre 5 et 200 ppm de carbone.

### Exemples

Deux compositions de poudre de superalliage ont été étudiées, une composition comprenant 160 ppm de carbone (Exemple 1) et une composition similaire à la composition de l'Exemple 1 mais comprenant 740 ppm de carbone (Exemple 2).

Les compositions respectives des Exemples 1 et 2 (Ex1 et Ex2) sont données au Tableau 1 en pourcentage massique, le complément étant constitué par du nickel et des impuretés inévitables.

L'Exemple 1 comprend en outre, comme impuretés inévitables, 0,060 % en masse de silicium et 0,030 % en masse d'oxygène.

L'Exemple 2 comprend en outre, comme impuretés inévitables, 0,050 % en masse de silicium, 0,022 % en masse d'oxygène et 0,014 % en masse de manganèse.

**[Tableau 1]**

| | Cr | Co | Mo | Al | Ti | Cu | Fe | C |
|---|---|---|---|---|---|---|---|---|
| Ex1 | 14,72 | 15,06 | 4,3 | 4,4 | 3,6 | 0,03 | 0,20 | 0,0160 |
| Ex2 | 15,01 | 14,30 | 4,5 | 4,2 | 3,5 | 0,03 | 0,14 | 0,0740 |

Lors de l'étape de mélange 102, la poudre de superalliage est mélangée avec au moins deux liants, un liant primaire thermoplastique qui confère au mélange des propriétés rhéologiques permettant l'injection du mélange dans le moule et un liant secondaire qui confère à la pièce crue une tenue mécanique permettant de manipuler la pièce crue après démoulage.

Typiquement, le taux de charge du mélange, c'est-à-dire le volume de poudre rapporté au volume total (poudre + additifs) est compris entre 60 et 70%. Les additifs comprennent les liants et d'autres addifitifs.

Dans le mode de réalisation décrit, le rapport de liant primaire par rapport au liant secondaire est de 2:1 en masse, c'est-à-dire que le mélange comprend deux fois plus de liant primaire que de liant secondaire en masse.

Comme exemple non limitatif de liant primaire thermoplastique, on peut citer la paraffine, la cire de carnauba, la cire d'abeille, l'huile d'arachide, l'acétanilide, l'antipyrine, le naphtalène, la résine polyoxyméthylénique (POM).

Comme exemple non limitatif de liant secondaire, on peut citer le polyéthylène (PE), le polypropylène (PP), le polystyrène (PS), les polyamides (PA), le polyéthylène-acétate de vinyle (PE-VA), le polyacrylate d'éthyle (PEA), les polyphtalamides (PPA).

Comme exemple non limitatif d'autres additifs, on peut citer l'acide stéarique, l'acide oléique et leurs esters ainsi que les esters d'acide phtalique.

L'étape de moulage par injection 104 du mélange dans un moule pour obtenir une pièce crue est ensuite réalisée de manière connue.

L'étape de déliantage 106 est généralement réalisée en deux sous-étapes, une première sous-étape 106A de déliantage du liant primaire. Cette étape de déliantage du liant primaire 106A est généralement à température comprise entre 30°C et 100°C et au moyen d'un solvant. Le solvant peut par exemple être de l'eau.

Le liant secondaire est toujours présent et confère à la pièce une tenue mécanique qui permet sa manipulation.

La deuxième sous-étape 106B de déliantage est une étape thermique, c'est-à-dire une étape au cours de laquelle on chauffe la pièce pour brûler le liant secondaire et obtenir la pièce déliantée.

Cette deuxième sous-étape 106B est par exemple réalisée lors de la montée en température en vue du frittage de la pièce. Par exemple, l'étape de déliantage thermique 106B est réalisée entre 400°C et 700°C avec un palier compris entre 30 minutes et 10 heures.

Lors de l'étape de frittage 108, la pièce déliantée est densifiée. Par exemple, la pièce est frittée entre 1230°C et 1300°C pendant 5 h.

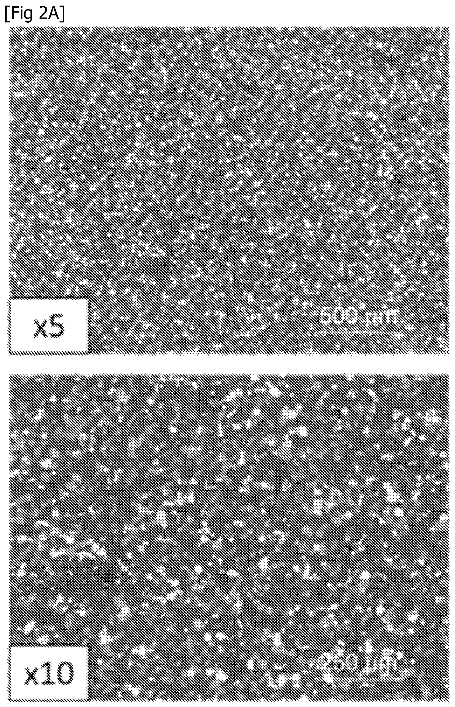

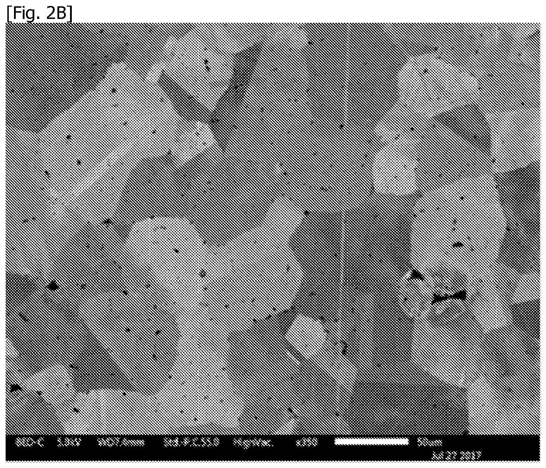

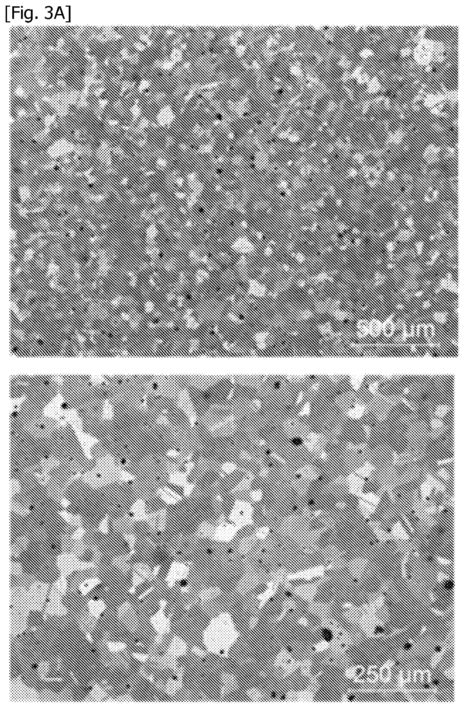

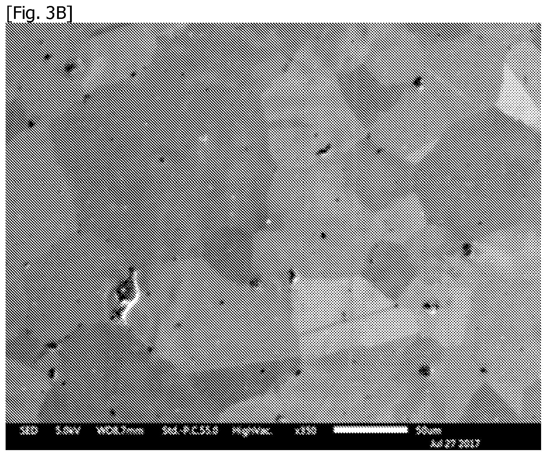

Les figures 2 et 3 représentent respectivement les microstructures de l'Exemple 2 et de l'Exemple 1. On constate qu'après l'étape de frittage 108 et avant l'étape de traitement thermique 110, la taille moyenne des grains est d'environ ASTM8 pour l'Exemple 2 alors qu'elle est d'environ ASTM4 pour l'Exemple 1, mesurée selon la norme ASTM E112-13.

La pièce frittée est ensuite traitée thermiquement. L'étape de traitement thermique 110 comprend une étape de croissance des grains 110A de sorte que la taille moyenne des grains est supérieure ou égale à ASTM6, de préférence supérieure ou égale à ASTM5, encore plus de préférence supérieure ou égale à ASTM4, mesurée selon la norme ASTM E112-13 et une étape de précipitation d'une phase γ' 110B.

Typiquement, après l'étape de croissance des grains 110A, pour l'Exemple 2, la taille moyenne des grains est d'environ ASTM6 pour une étape de croissance des grains 110A réalisée à 1275°C pendant 10 h.

Après l'étape de croissance des grains 110A, pour l'Exemple 1, la taille la taille moyenne des grains est d'environ ASTM3 pour une étape de croissance des grains 110A réalisée à 1275°C pendant 5 h.

Après l'étape de croissance des grains 110A, l'étape de traitement thermique 110 comprend l'étape de précipitation d'une phase γ' 110B. Cette étape de précipitation d'une phase γ' 110B ne modifie pas la taille moyenne des grains.

Entre l'étape de frittage 108 et l'étape de traitement thermique 110, la pièce peut être redescendue à température ambiante.

Entre l'étape de croissance des grains 110A et l'étape de précipitation 110B, la pièce peut être redescendue à température ambiante.

La pièce obtenue à partir de la poudre de superalliage de l'Exemple 1 a un meilleur comportement au fluage à haute température que la pièce obtenue à partir de la poudre de superalliage de l'Exemple 2. A titre indicatif, à 950°C, toutes conditions d'essai étant constantes, on constate une durée de vie entre 2 à 2,5 fois supérieure pour la pièce obtenue à partir de la poudre de superalliage de l'Exemple 1 que pour la pièce obtenue à partir de la poudre de superalliage de l'Exemple 2. Le test est un essai de fluage uniaxial en traction, mené jusqu'à rupture, selon la norme NF EN ISO 204.

Quoique le présent exposé ait été décrit en se référant à un exemple de réalisation spécifique, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Poudre de superalliage à base de nickel comprenant, en pourcentages massiques, 14,00 à 15,25 % de chrome, 14,25 à 15,75 % de cobalt, 3,9 à 4,5 % de molybdène, 4,0 à 4,6 % d'aluminium, 3,0 à 3,7 % de titane, 0 à 0,10 de cuivre, 0 à 0,50 de fer, 0 à 200 ppm de carbone, le complément étant constitué par du nickel et des impuretés inévitables.

2. Poudre de superalliage à base de nickel selon la revendication 1, comprenant 5 à 200 ppm de carbone.

3. Poudre de superalliage à base de nickel selon la revendication 1 ou 2, présentant une granulométrie D90 inférieure ou égale à 75 µm, de préférence inférieure ou égale à 50 µm, mesurée par diffraction laser selon la norme ISO 13320.

4. Poudre de superalliage à base de nickel selon l'une quelconque des revendications 1 à 3, présentant une morphologie sphérique.

5. Pièce réalisée à partir de la poudre de superalliage à base de nickel selon l'une quelconque des revendications 1 à 4, la pièce comprenant moins de 700 ppm de carbone, de préférence moins de 600 ppm de carbone.

6. Pièce selon la revendication 5, la pièce étant obtenue par un procédé de moulage par injection de poudre.

7. Pièce selon la revendication 5 ou 6, dans laquelle la taille moyenne des grains est supérieure ou égale à ASTM6, de préférence supérieure ou égale à ASTM5, encore plus de préférence supérieure ou égale à ASTM 4, mesurée selon la norme ASTM E112-13.

8. Procédé de fabrication (100) d'une pièce à partir d'une poudre de superalliage à base de nickel selon l'une quelconque des revendications 1 à 4, comprenant les étapes suivantes :
- mélange (102) de la poudre de superalliage à base de nickel avec au moins deux liants pour obtenir un mélange ;
- moulage par injection (104) du mélange dans un moule pour obtenir une pièce crue ;
- déliantage (106) de la pièce crue pour obtenir une pièce déliantée ;
- frittage (108) de la pièce déliantée pour obtenir une pièce frittée ; et
- traitement thermique (110) de la pièce frittée comprenant une étape de croissance des grains (110A) de sorte que la taille moyenne des grains est supérieure ou égale à ASTM6, de préférence supérieure ou égale à ASTM5, encore plus de préférence supérieure ou égale à ASTM4, mesurée selon la norme ASTM E112-13 et une étape de précipitation d'une phase / (110B).

9. Procédé de fabrication (100) selon la revendication 8, dans lequel l'étape de frittage (108) est réalisée avec un palier en température compris entre 1 h et 6 h.

10. Procédé de fabrication (100) selon la revendication 8 ou 9, dans lequel l'étape de croissance des grains (110A) est réalisée avec un palier en température supérieur ou égal à 1 h et inférieur ou égal à 20 h, de préférence inférieur ou égal à 15 h, encore plus de préférence inférieur ou égal à 10 h.

## Patentansprüche

1. Superlegierungspulver auf Nickelbasis, umfassend in Ma% 14,00 bis 15,25 % Chrom, 14,25 bis 15,75 % Kobalt, 3,9 bis 4,5 % Molybdän, 4,0 bis 4,6 % Aluminium, 3,0 bis 3,7 % Titan, 0 bis 0,10 Kupfer, 0 bis 0,50 Eisen, 0 bis 200 ppm Kohlenstoff, wobei das Komplement von Nickel und den unvermeidlichen Verunreinigungen gebildet ist.

2. Superlegierungspulver auf Nickelbasis nach Anspruch 1, umfassend 5 bis 200 ppm Kohlenstoff.

3. Superlegierungspulver auf Nickelbasis nach Anspruch 1 oder 2, aufweisend eine Korngröße D90 kleiner oder gleich 75 µm, vorzugsweise kleiner oder gleich 50 µm, gemessen durch Laserdiffraktion nach Norm ISO 13320.

4. Superlegierungspulver auf Nickelbasis nach einem der Ansprüche 1 bis 3, aufweisend eine sphärische Morphologie.

5. Teil, hergestellt aus dem Superlegierungspulver auf Nickelbasis nach einem der Ansprüche 1 bis 4, wobei das Teil weniger als 700 ppm Kohlenstoff, vorzugsweise weniger als 600 ppm Kohlenstoff umfasst.

6. Teil nach Anspruch 5, wobei das Teil durch ein Formungsverfahren durch Pulvereinleitung erhalten wird.

7. Teil nach Anspruch 5 oder 6, wobei die mittlere Größe der Körner größer oder gleich ASTM6, vorzugsweise größer oder gleich ASTM5, noch vorzugsweiser größer oder gleich ASTM 4 ist, gemessen nach Norm ASTM E112-13.

8. Verfahren zur Herstellung (100) eines Teils aus einem Superlegierungspulver auf Nickelbasis nach einem der Ansprüche 1 bis 4, umfassend die folgenden Schritte:
- Mischen (102) des Superlegierungspulvers auf Nickelbasis mit mindestens zwei Bindemitteln, um ein Gemisch zu erhalten;
- Formen durch Einleiten (104) des Gemischs in eine Form, um einen Rohling zu erhalten;
- Entbindern (106) des Rohlings, um ein entbindertes Teil zu erhalten;
- Sintern (108) des entbinderten Teils, um ein gesintertes Teil zu erhalten; und
- thermisches Behandeln (110) des gesinterten Teils, umfassend einen Wachstumsschritt der Körner (110A) derart, dass die mittlere Größe der Körner größer oder gleich ASTM6, vorzugsweise größer oder gleich ASTM5, noch vorzugsweiser größer oder gleich ASTM4 ist, gemessen nach Norm ASTM E112-13 und einen Schritt des Ausfällens einer Phase γ (110B).

9. Herstellungsverfahren (100) nach Anspruch 8, wobei der Schritt des Sinterns (108) mit einer Temperaturstufe zwischen 1 h und 6 h durchgeführt wird.

10. Herstellungsverfahren (100) nach Anspruch 8 oder 9, wobei der Wachstumsschritt der Körner (110A) mit einer Temperaturstufe größer oder gleich 1 h und kleiner oder gleich 20 h, vorzugsweise kleiner oder gleich 15 h, noch vorzugsweiser kleiner oder gleich 10 h durchgeführt wird.

## Claims

1. Nickel-based superalloy powder comprising, by mass percent, 14.00 to 15.25% chromium, 14.25 to 15.75% cobalt, 3.9 to 4.5% molybdenum, 4.0 to 4.6% aluminum, 3.0 to 3.7% titanium, 0 to 0.10 copper, 0 to 0.50 iron, 0 to 200 ppm carbon, the remainder consisting of nickel and unavoidable impurities.

2. Nickel-based superalloy powder according to claim 1, comprising 5 to 200 ppm carbon.

3. Nickel-based superalloy powder according to claim 1 or 2, having a D90 particle size of less than or equal to 75 µm, preferably less than or equal to 50 µm, measured by laser diffraction according to the ISO 13320 standard.

4. Nickel-based superalloy powder according to any one of claims 1 to 3, having a spherical morphology.

5. Component made from the nickel-based superalloy powder according to any one of claims 1 to 4, the component comprising less than 700 ppm carbon, preferably less than 600 ppm carbon.

6. Component according to claim 5, the component being obtained by a powder injection molding process.

7. Component according to claim 5 or 6, wherein the average grain size is greater than or equal to ASTM6, preferably greater than or equal to ASTM5, more preferably greater than or equal to ASTM 4, as measured according to the ASTM E112-13 standard.

8. Manufacturing process (100) of a component from a nickel-based superalloy powder according to any one of claims 1 to 4, comprising the following steps:
- mixing (102) the nickel-based superalloy powder with at least two binders to obtain a mixture;
- injection molding (104) the mixture in a mold to obtain a green component;
- debinding (106) the green component to obtain a debonded component;
- sintering (108) the debonded component to obtain a sintered component; and
- heat treating (110) the sintered component comprising a step of growing the grains (110A) so that the average size of the grains is greater than or equal to ASTM6, preferably greater than or equal to ASTM5, even more preferably greater than or equal to ASTM4, measured according to the ASTM E112-13 standard and a step of precipitating a γ' phase (110B).

9. Manufacturing process (100) according to claim 8, wherein the sintering step (108) is performed with a temperature step comprised between 1 h and 6 h.

10. Manufacturing process (100) according to claim 8 or 9, wherein the grain growth step (110A) is carried out with a temperature step greater than or equal to 1 h and less than or equal to 20 h, preferably less than or equal to 15 h, even more preferably less than or equal to 10 h.
